Europäisches Patentamt

European Patent Office

Office européen des brevets

(11) Publication number : **0 465 127 A1**

(12) **EUROPEAN PATENT APPLICATION**

(21) Application number : 91305827.7

(22) Date of filing : 27.06.91

(51) Int. Cl.⁵ : **G02B 6/44**

(30) Priority : 06.07.90 GB 9015002

(43) Date of publication of application :
08.01.92 Bulletin 92/02

(84) Designated Contracting States :
DE DK FR NL

(71) Applicant : **Telephone Cables Limited
Chequers Lane
Dagenham Essex RM9 6QA (GB)**

(72) Inventor : **Jung, Roger Erwin
38 Tufton Road, Chingford
London, E4 8LE (GB)**
Inventor : **George, Edward Kitchener
93 Nelson Road
Rainham, Essex, RM13 8AP (GB)**

(74) Representative : **Kirby, Harold Victor Albert
The General Electric Company, p.l.c. GEC
Patent Department Wembley Office Hirst
Research Centre East Lane
Wembley Middlesex HA9 7PP (GB)**

(54) Optical fibre organiser.

(57) A splice and optical fibre organiser especially for underwater cable applications incorporates at least one sheet of flexible material (1,2) having means for accommodating excess lengths of fibre (11,12) and capable of being wrapped with the fibres into a generally cylindrical shape. This arrangement provides a relatively compact joint assembly.

# Fig.1.

This invention relates to a device for use in forming connections between optical fibres of separate lengths of multi-fibre optical cable, such devices, commonly called splice and fibre organisers, incorporating means for storing excess lengths of fibres in looped form, to facilitate the splicing of pairs of fibres together; the invention is especially, though not exclusively, concerned with such devices which are suitable for underwater cable applications.

Underwater optical fibre cables are commonly subjected to a high tensile loading, and for this reason the connections between the strength members at a joint between separate lengths of cable tend to be somewhat bulky. Furthermore the connections need to be protected against external damage and made adequately water-tight by a surrounding jacket, and an object of the present invention is to provide a relatively compact splice and fibre organiser which can be accommodated in a confined space within the outer jacket, so as to avoid unduly increasing the overall size of the joint.

According therefore to the invention, a splice and fibre organiser comprises at least one sheet of flexible material having means for accommodating excess lengths of optical fibres in looped form on a surface of the sheet, and capable of being wrapped, with the loop of fibres, into a generally cylindrical or part cylindrical shape.

It will be appreciated that the dimensions of the sheet must be sufficient to accommodate the minimum bending radius specified for the fibres with which it is to be used.

For use in an underwater cable joint, the sheet is conveniently attached to a central section of a joint assembly having two end sections designed to be connected to respective strength members at the adjacent ends of two lengths of optical fibre cable and, with the excess lengths of spliced optical fibres secured to the sheet in looped form, the sheet is arranged to be wrapped around at least part of the central section. Any convenient means may be employed for securing the wrapped sheet in position.

The sheet may be formed with a pocket for accommodating an optical fibre loop, or may be provided with a series of tabs designed to hold the loop in position.

The sheet may be secured to the central section of the joint assembly at one edge, and two such sheets may then be provided, the sheets projecting, prior to wrapping, away from each other and being wrapped around the central section in opposite directions. Alternatively a single sheet may be connected to the central section along a region disposed between opposite edges, and having means for accommodating respective loops of optical fibres on opposite sides of said region.

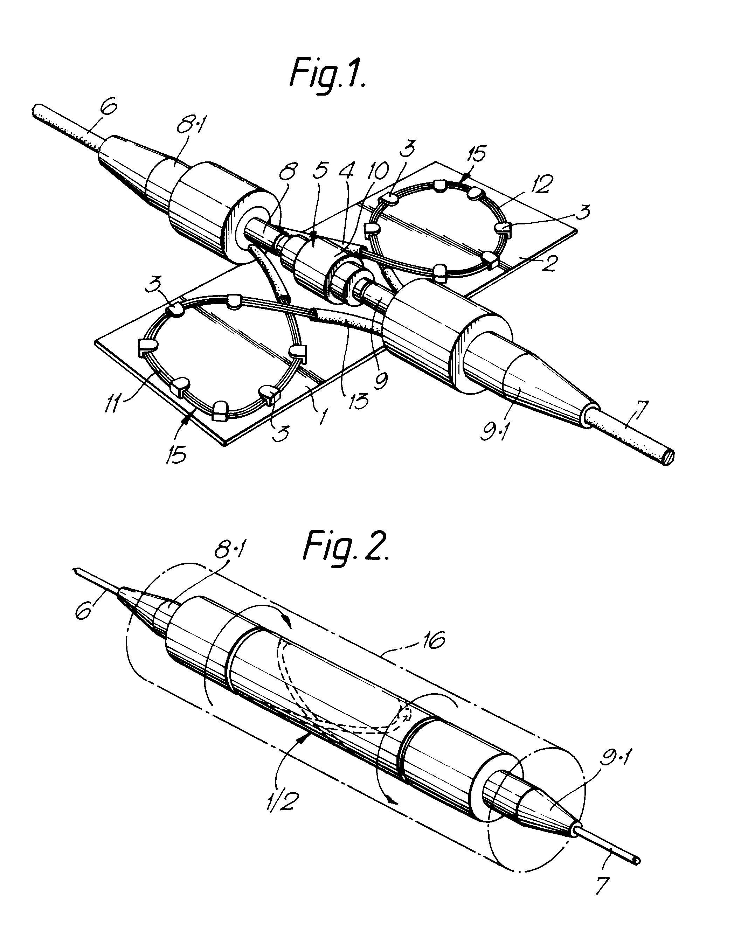

One splice and fibre organiser designed for an underwater cable joint, and its method of use, will now be described by way of example with reference to the accompanying schematic drawing, in which Figures 1 and 2 illustrate diagrammatically two stages in the formation of a joint utilising the organiser.

Referring first to Figure 1, the organiser incorporates a pair of thin flexible, initially flat, sheets 1, 2, for example of polyethylene, each having a series of tabs 3 pressed from the sheet and disposed in the form of a circle. Each sheet is designed to be connected along one edge to a central section of a joint assembly 5 forming a connection between two lengths 6, 7 of optical fibre cable, so as to extend therefrom in opposite directions, as shown, the central section constituting a connection between centrally located longitudinal strength members of the lengths of cable. Such connection conveniently comprises a pair of attachment means 8, 9 each connectable to the strength members of a respective length of cable by clamps 8.1 and 9.1, and a coupling member 10 having left- and right-hand threaded regions at opposite ends capable of co-operating with left- and right-hand threaded regions of the respective attachment means 8.9, so that the screwing of the member 10 to the attachment means has the effect of drawing them to each other.

Fibres 11, 12 from the two lengths of cable are routed through flexible transition tubes 13, 14, and following stripping of the fibres and the splicing of the respective bare length of fibre from each cable length to each other, the excess length of fibres are wound into loops which are laid on the surfaces of the sheets as at 15, and held in place by the tabs 3. The natural springiness of the fibres ensures that they are maintained in the looped position on the sheets by the tabs 3. Conveniently the method of splicing involves the use of fibre coating reconstitution as described in co-pending patent Application No. 8900788, so that a splice is not rigid but can be formed to conform to the normal bending radii applied to the fibres. Accordingly the splice positions, relative to the sheets is not important.

When splicing has been completed and the loops 15 of fibre secured in position by the tabs 3, each organiser sheet 1, 2 is wrapped around the central section of the joint as indicated in Figure 2, and secured in position in any convenient manner. Suitably one of the sheets is wrapped around the central section, and the second wrapped around the first.

Finally the joint is completed by surrounding the sheets and adjacent ends of the lengths of cable with an outer protective sleeve, as indicated diagrammatically by the broken line 16.

Instead of the fibre loops being secured by tabs, they may alternatively be located in pockets pressed into the sheets 1, 2 and instead of the organiser incorporating two sheets, it may comprise a single sheet only. This can be arranged to accommodate one or more optical fibre loops depending upon its dimensions, and where it is designed to carry two such loops it is conveniently secured to the central section of the cable joint, along a centrally disposed region so that its ends lie on opposite sides of the central section in a similar manner to the separate sheets 1, 2 of Figure 1.

## Claims

1. A splice and fibre organiser having means for supporting excess lengths of optical fibres (11, 12) in looped form characterised in that said means comprises at least one sheet (1, 2) of flexible material for supporting at least one optical fibre loop (15) on a surface, and capable of being wrapped, with the loop of fibres, into a generally cylindrical or part cylindrical shape.

2. A splice and fibre organiser according to Claim 1 characterised in that the sheet (1, 2) is attached to the central section (10) of a joint assembly (5) having two end sections (8, 9) designed to be connected to respective strength members at the adjacent ends of two lengths (6, 7) of optical fibre cable, and is capable of being wrapped around at least part of said central section.

3. A splice and fibre organiser according to Claim 1 or 2 characterised in that the sheet is formed with a pocket for accommodating a said optical fibre loop (15).

4. A splice and fibre organiser according to Claim 1 or 2 characterised in that the sheet is provided with a series of tabs (3) designed to hold a said optical fibre loop (15).

5. A splice and fibre organiser according to Claim 2 characterised in that the sheet (1, 2) is connected to the central section (10) of the joint assembly (5) at one edge.

6. A splice and fibre organiser according to Claim 2 characterised in that it incorporates two said sheets (1, 2) each connected to the central section (10) of the joint assembly at adjacent edges so that, prior to wrapping, they project away from each other.

7. A splice and fibre organiser according to Claim 2 characterised in that a single said sheet (1, 2) is connected to the central section (10) of the joint assembly (5) along a region disposed between opposite edges, and has means for accommodating respective loops (15) of optical fibres (11, 12) on opposite sides of said region.

8. An underwater optical fibre cable system having lengths of cable connected to each other by means of a joint assembly (5) provided with a splice and fibre organiser according to any preceding claim.

EP 0 465 127 A1

Fig.1.

Fig.2.

4

EP 0 465 127 A1

**European Patent Office**

**EUROPEAN SEARCH REPORT**

Application Number

EP 91 30 5827

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | EP-A-0 084 440 (RAYCHEM CORP.) * abstract; page 7, lines 1-12; page 12, line 16 - page 13, line 6; claim 1; figures 1,4,8 * | 1,2 | G 02 B 6/44 |
| A | | 4-6 | |
| X | PATENT ABSTRACTS OF JAPAN, DATABASE JAPS/JPO vol. 4, no. 153 (P-33), 25 October 1980; & JP - A - 55100504 (NTT) 31.07.1980 | 1,3 | |
| X | PATENT ABSTRACTS OF JAPAN vol. 9, no. 6 (P-326)(1729), 11 January 1985; & JP - A - 59154414 (SHOWA DENSEN DENRA) 03.09.1984 | 1,2 | |
| X | PATENT ABSTRACTS OF JAPAN, DATABASE JAPS/JPO vol. 10, no. 327 (P-513), 7 November 1986; & JP - A - 61134707 (FUJIKURA) 21.06.1986 | 1 | |

TECHNICAL FIELDS SEARCHED (Int. Cl.5)

G 02 B

The present search report has been drawn up for all claims

| Place of search | Date of completion of the search | Examiner |
|---|---|---|
| BERLIN | 19-09-1991 | HYLLA W R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

5